# EUROPÄISCHE PATENTSCHRIFT

(11) **EP 2 928 796 B1**
(45) Veröffentlichungstag und Bekanntmachung des Hinweises auf die Patenterteilung: **03.08.2016**
(21) Anmeldenummer: 13776419.7
(22) Anmeldetag: 10.10.2013
(51) Int. Cl.: B65G 47/86, B65G 47/90, B67C 3/24

(54) **VORRICHTUNG ZUM GREIFEN UND HALTEN VON BEHÄLTERN**
DEVICE FOR GRIPPING AND HOLDING CONTAINERS
DISPOSITIF SERVANT À SAISIR ET MAINTENIR DES CONTENANTS

(30) Priorität: 04.12.2012 DE 102012111753
(43) Veröffentlichungstag der Anmeldung: 14.10.2015
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2013/003049
(87) Internationale Veröffentlichungsnummer: WO 2014/086441

(56) Entgegenhaltungen:
- EP-A2- 2 295 352
- DE-B3-102008 019 766
- US-A- 3 825 293

## Beschreibung

Die Erfindung betrifft eine Vorrichtung zum Greifen und Halten von Behältern in Behälterbehandlungsanlagen, mit einem an einem Transportelement befestigbaren Tragkörper, welcher schwenkbare, federbelastete Greifarme aufweist, wobei an den Greifarmen Befestigungselemente für eine in Schließrichtung wirkende Zugfeder angeordnet sind.

Behälterbehandlungsanlagen sind in unterschiedlichen Ausführungen, z.B. als Füllmaschinen, Etikettiermaschinen, Inspektionsmaschinen oder Rinser bekannt. Eingangs genannte Behälter können beispielsweise als Flaschen für Flüssigkeiten, beispielsweise für Getränke verwendet werden. Die Behälter z.B. Flaschen können aus einem transparenten oder transluzenten Material, beispielsweise aus Glas oder aus einem transluzenten Kunststoff, z.B. PET bestehen. Denkbar ist aber auch, dass die Behälter aus anderen Materialien bestehen und mit anderen Füllgütern befüllbar sind.

Beispielsweise bei Füllmaschinen gibt es eine Fülle von Lösungen, die Flaschen auf ihrem Weg durch die Anlage zu führen und zu halten. Dabei müssen die Flaschen zum Teil gewendet werden, in jedem Falle aber sicher geführt und ergriffen werden. Die DE 297 13 510 U1 zeigt einen derartigen Greifer beispielsweise bei einem Rotationsförderer, bei dem an einer Tragplatte schwenkbar gelagerte Greifarme vorgesehen sind, die zwischen ihren den Greifbacken gegenüberliegenden anderen Enden eine Druckfeder aufweisen, die diese Greifarme in Schließstellung zwingt. Die Flaschen können dabei über Eintrittsschräger an den Vorderseiten der Greifarme unter Zusammendrücken der Feder eingeschoben und umgekehrt wieder ausgezogen werden.

In der gattungsbildenden EP 2 279 143 A1 wird eine Greif- und Haltevorrichtung vorgeschlagen, deren Greifarme kostengünstig, einfach und sogar werkzeuglos auswechselbar sind. Dies wird vorteilhaft erreicht, indem zwischen Lagerenden der Greifarme ein Fixierelement positioniert ist, wobei die Lagerenden eine Randausnehmung aufweisen.

Durch Verdrehen der Greifarme in eine extreme Öffnungslage und vorherigem Entspannen der Feder werden die Greifarme aus der Fixierung gelöst, so dass diese leicht und werkzeuglos abnehmbar sind. Die EP 2 279 143 A1 offenbart weiter, dass der Tragkörper zum Befestigen an dem Transportelement verformbare Montagelaschen aus einem elastischen Material aufweist, wobei die Montagelaschen eine klemmende Anlage an Fixierelementen des Transportelementes bewirken. Die Fixierelemente weisen Tellerköpfe oder Beilegscheiben auf, welche die verformbaren Montagelaschen am Ausfallen hindern.

Ausgehend von dem vorbekannten Stand der Technik liegt der Erfindung die Aufgabe zugrunde, eine Vorrichtung zum Greifen und Halten bereitzustellen welche eine verbleibende Zentrierung der Greifarme in einer Mittellage, insbesondere bei seitlich wirkender Auslenkkraft mit einfachen Mitteln ermöglicht.

Erfindungsgemäß wird die Aufgabe durch eine Vorrichtung zum Greifen und Halten mit den Merkmalen des Anspruchs 1 gelöst, wobei ein Fixierelement vorgesehen ist, welches einerseits mit seinem Fixierende in die Zugfeder eingreift und andererseits an dem Tragkörper angeordnet ist.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

In günstiger Ausgestaltung weist das Fixierelement eine T-förmige Ausgestaltung aus, wobei das Fixierende als Kopfsteg senkrecht zu einem Hauptsteg angeordnet ist, der sich an dem Fixierende anschließt und sich bis zu einem Ende des Fixierelementes erstreckt.

Zielführend ist, wenn der Kopfsteg mit seinem in die Zugfeder eingreifenden Eingreifabschnitt verrundet ausgeführt ist, wobei ein an dem Kopfsteg zu dem Eingreifabschnitt gegenüberliegender Aufnahmeabschnitt eine hakenartige Vertiefung aufweist. In der Vertiefung kann ein Kraftspeicher bevorzugt werkzeuglos eingehängt werden.

Das Fixierelement wird mit seinem Kopfsteg, bevorzugt mit dem verrundet ausgeführten Eingreifabschnitt in bevorzugter Ausgestaltung zwischen zwei Windungen der Zugfeder gesetzt. In bevorzugter Ausgestaltung kann vorgesehen sein, das Fixierelement mit seinem Kopfsteg, bevorzugt mit dem verrundet ausgeführten Eingreifabschnitt in der Mitte der Zugfeder zwischen zwei Windungen zu platzieren.

Zielführend ist, wenn das Fixierelement, also sein Kopfsteg, bevorzugt dessen verrundet ausgeführter Eingreifabschnitt zwischen zwei benachbarten Windungen der Zugfeder so eingesetzt wird, dass die Rundung des Eingreifabschnittes an dem Innenumfang der zwischen den benachbarten Windungen angeordneten Mittelwindung anliegt. Denkbar ist aber auch, wenn der Kopfsteg, also sein verrundeter Eingreifabschnitt mit einer solchen Dicke ausgeführt ist, dass eine klemmenden Anlage zwischen zwei benachbarten Windungen der Zugfeder erreicht wird.

In einer Ausgestaltung ist das Fixierelement mit dem Tragkörper lagesicher verbindbar, wozu das Fixierelement an seinem Hauptsteg zumindest eine Einlegenut aufweist. Hierbei ist es zweckmäßig, wenn die Einlegenut an einer Unterseite des Fixierelementes angeordnet ist, an welcher auch die hakenartige Vertiefung des Kopfsteges angeordnet ist. Die Einlegenut ist bevorzugt so ausgeführt, dass ein entsprechender Eingreifsteg des Tragkörpers klemmend in die Eingreifnut eingreifen kann.

In weiter bevorzugter Ausgestaltung sind mehrere Einlegenuten, bevorzugt zwei Einlegenuten vorgesehen, welche in Axialrichtung des Fixierelementes gesehen zueinander beabstandet, also hintereinander angeordnet sind, um so die lagesichere Verbindung zum Tragkörper weiter zu erhöhen. Selbstverständlich sind so auch mehrere, also bevorzugt zwei korrespondierende Eingreifstege vorgesehen.

In einer besonders günstigen Ausgestaltung kann das Fixierelement aus einem Blech, insbesondere einer Art Federblech, gebildet sein, wobei als Material bevorzugt ein Edelstahl, weiter bevorzugt ein rostfreier Edelstahl gewählt werden kann. Insofern kann das Fixierelement auch als Federblech bezeichnet werden, da es die Feder bei einem seitlichen Ausweichen in Umfangsrichtung, bzw. quer zu den Greifarmen begleitet und unterstützt. Auch wenn die Ausformung als Federstahl Vorteile bietet, kann natürlich das Fixierelement auch aus einem Kunststoff gebildet sein, welches mit seinen Elementen (Kopfsteg, Hauptsteg, verrundeter Eingreifabschnitt, hakenartige Vertiefung, Einlegnut(en)) einstückig herstellbar ist, ggf. sogar als ein einziges monolithisches Bauteil aus Fixierelement und Tragkörper mit dessen Funktionselementen.

Vorteilhaft ist, wenn das Fixierelement elastisch ausgeführt ist, um so zusätzliche Nachgiebigkeit, also Elastizität zu erreichen und eine Überlastung auszuschließen.

Mit dem Fixierelement wird die Zugfeder quasi in zwei Einzelfedern unterteilt, wobei das Fixierelement in bevorzugter Ausgestaltung auf die Axialerstreckung bezogen mittig in die Zugfeder eingreift, um so jeweils zwei gleich große Federteilbereiche zu erreichen. Die so erreichte Aufteilung der einen Zugfeder in quasi zwei Einzelfedern ist jedoch nur bei seitlicher Aüslenkung wirksam, und belässt die Greifarme auch bei seitlich wirkender Auslenkkraft in ihrer Mittellage. Bei einem betriebsgemäßen Öffnen und Schließen der Greifarme wirkt sich das Fixierelement nicht nachteilig auf die Funktion der Zugfeder aus. Das Fixierelement ist einfach und kostengünstig herzustellen und wird in einfacher Weise mit dem Tragkörper verbunden, indem dieses einfach in Nuten des Tragkörpers geschoben werden. Grundsätzlich ist mit dem Tragkörper eine offene Konstruktion geschaffen, welche leicht zu reinigen ist.

Der Tragkörper selbst ist in bevorzugter Ausgestaltung als Kunststoffelement ausgeführt und mit einem Transportelement verrastbar. In dem Transportelement können Rastöffnungen angeordnet sein, welche mit Rastelementen an dem Tragkörper wiederholbar verbindbar und lösbar sind. Das Transportelement kann als Kreisscheibe ausgeführt sein, so dass ein Sterntransporteur gebildet ist, an welchem die Tragkörper befestigbar sind. Durch die Rastverbindung kann der Tragkörper in seiner Gesamtheit schnell und einfach von dem Transportelement werkzeuglos getrennt aber auch wieder verbunden werden. Das Fixierelement selbst ist als Einzelheit natürlich auch leicht und einfach austauschbar oder von dem Tragkörper entfernbar. Durch die schnelle und einfache Austauschbarkeit kann der bei einem Crash entstandene Schaden zügig behoben werden.
Die Erfindung wird im Folgenden anhand der Figuren an zwei Ausführungsbeispielen näher erläutert. Es zeigen:
Fig. 1 eine Vorrichtung zum Greifen und Halten, welche mit einem Transportelement verbunden ist, in einem Längsschnitt,
Fig. 2 die Vorrichtung aus Figur 1 ohne Transportelement in einer perspektivischen Ansicht, und
Fig. 3 die Vorrichtung aus Figur 1 ohne Transportelement in einem Längsschnitt.
Fig. 4a und 4b eine Vorrichtung zum Greifen und Halten in zwei Ansichten in einer alternativen Ausführungsform.

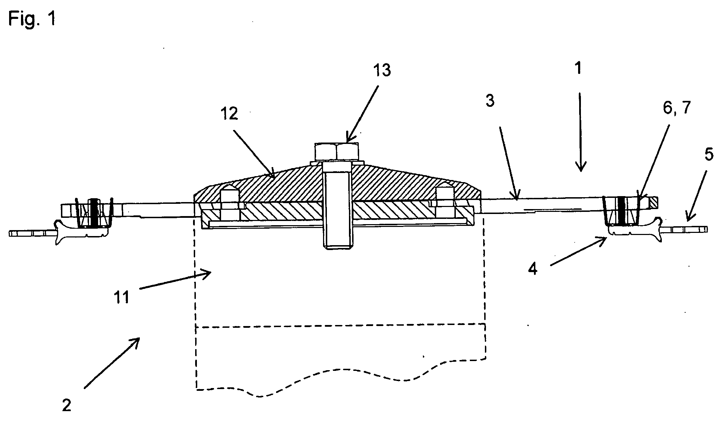

In den unterschiedlichen Figuren sind gleiche Teile stets mit denselben Bezugszeichen versehen, weswegen diese in der Regel auch nur einmal beschrieben werden. Figur 1 zeigt eine Vorrichtung 1 zum Greifen und Halten von Behältern, insbesondere von Flaschen, bevorzugt von PET-Flaschen in einer Behälterbehandlungsanlage 2 mit an einem Transportelement 3 befestigbaren Tragkörper 4 mit daran schwenkbaren, federbelasteten Greifarmen 5. Der Tragkörper 4 weist Rastelemente 6 und das Transportelement 3 dazu korrespondierende Gegenrastelemente 7 auf, so dass der Tragkörper 4 mit dem Tragelement 3 verrastbar ist. Die Rastelemente 6 sind beispielhaft als Federstege 6 ausgeführt, welche an ihrem Kopfteil 8 Überstände 9 aufweisen. Die Gegenrastelemente 7 an dem Transportelement 3 sind als Rastöffnung ausgeführt, welche zwei Teilöffnungen aufweisen, wobei eine erste, größere Teilöffnung an das Kopfteil 8 mit seinen Überständen 9 angepasst ist, so dass der Federsteg 6 mit seinem Kopfteil durch die erste Teilöffnung führbar ist. Die erste Teilöffnung geht direkt in eine zweite, kleinere, also schmalere Teilöffnung über, welche an einen Hochsteg 10 unterhalb des Kopfteils 8 angepasst ist. Ist nun der Kopfteil 8 vollständig durch die erste Teilöffnung geführt, kann der Federsteg federkraftbedingt in die zweite Teilöffnung einspringen, also schnappen, wobei der Federsteg 6 aber noch etwas Vorspannung aufweist. Mit den Überständen 9 überragt das Kopfteil 8 die zweite Teilöffnung jeweils seitlich und liegt so auf dem Transportelement auf. So ist eine Rastverbindung geschaffen, welche auch bei Vibrationseinflüssen eine sichere Lage des Tragkörpers an dem Transportelement sicherstellt, wobei noch dazu eine werkzeuglose Montage und Demontage möglich ist.

Die Behälterbehandlungsanlage 2 kann zum Beispiel als Füllmaschine ausgeführt seien, von der lediglich eine Welle 11 erkennbar ist. Mit der Welle 11 ist das Transportelement 3 verbindbar. Das Transportelement 3 kann als Kreissegmentelement ausgeführt sein, wobei jedes der Kreissegmente mit der Welle 11 verbindbar ist. Dazu wird beispielsweise ein Hutelement 12 verwendet welches mit der Welle 12 über eine Schraube 13 verbindbar ist, so dass die Transportelemente 3 lagesicher gehalten sind, und so ein Sterntransporteur oder eine rotierende Behandlungsmaschine gebildet ist. In bevorzugter Ausgestaltung ist vorgesehen ein einziges Transportelement 3 als Kreisscheibe auszuführen, welche mit der Welle 11 gegebenenfalls mittels des Hutelementes 12 über die Schraube 13 verbindbar ist. Natürlich sind auch andere Befestigungsmöglichkeiten denkbar und Bauformen des Transportelementes möglich. Als Rastelemente 6 sind an dem Tragkörper 4 mehrere, wie beispielhaft dargestellt zwei Federstege 6 vorgesehen, welche einander gegenüberliegend an einer Drehaufnahme 15 angeordnet sind. Die Drehaufnahme 15 nimmt Drehzapfen der Greifarme 5 auf.

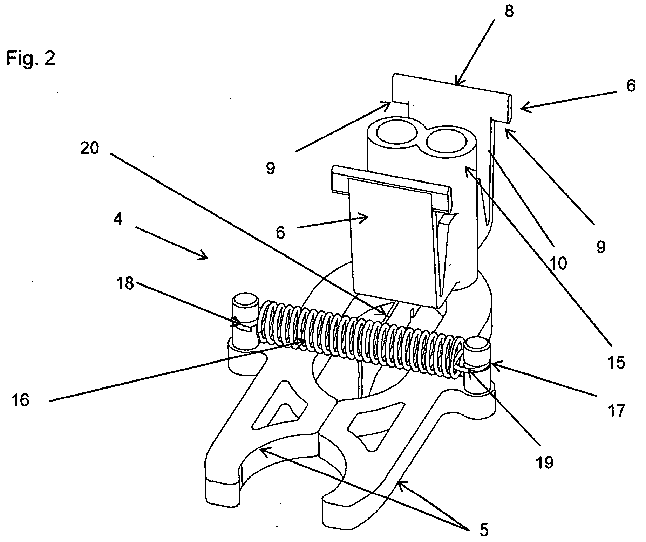

In Figur 2 ist eine in an den Greifarmen 5 angeordnete Zugfeder 16 erkennbar, welche an Befestigungselementen 17 befestigt ist. Die Befestigungselemente 17 sind als Befestigungszapfen 17 ausgeführt, welche eine umlaufende Ringnut 18 aufweisen, in welcher jeweils ein Endring oder eine Federöse 19 werkzeuglos einhängbar ist.

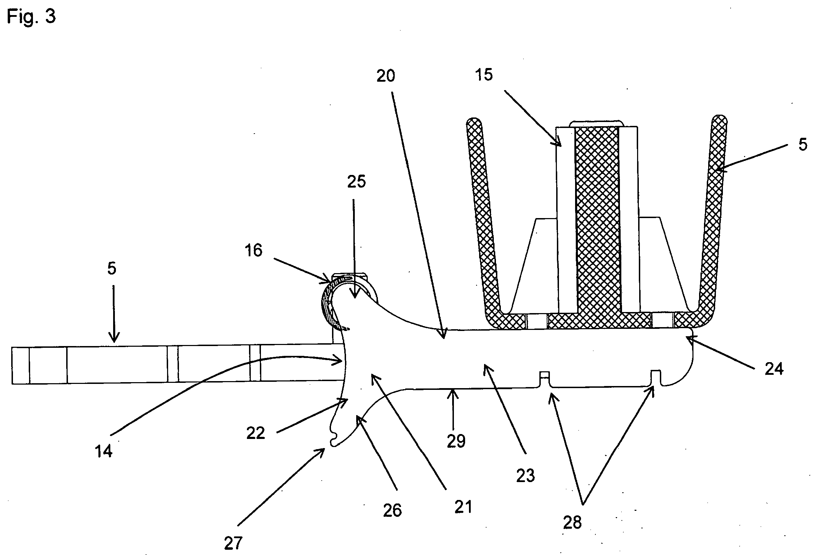

In Figur 3 ist weiter ein Fixierelement 20 erkennbar, welches einerseits mit seinem Fixierende 21 in die Zugfeder 16 eingreift und andererseits an dem Tragkörper 4 angeordnet ist, wobei der Tragkörper 4 aufgrund der gewählten Schnittansicht nicht erkennbar ist.

Wie in Figur 3 zu erkennen ist, weist das Fixierelement 20 eine T-förmige Ausgestaltung aus, wobei das Fixierende 21 als Kopfsteg 22 senkrecht zu einem Hauptsteg 23 angeordnet ist, der sich an dem Fixierende 21 anschließt und sich bis zu einem Ende 24 des Fixierelementes 20 erstreckt. Im gezeigten Beispiel, weist der Kopfsteg 22 eine gebogen, also hohlgewölbt verlaufende freie Kante 14 auf.

Wie gezeigt, kann es vorteilhaft sein, wenn der Kopfsteg 22 mit seinem in die Zugfeder 16 eingreifenden Eingreifabschnitt 25 verrundet ausgeführt ist, wobei ein an dem Kopfsteg 22 zu dem Eingreifabschnitt 25 gegenüberliegender Aufnahmeabschnitt 26 eine hakenartige Vertiefung 27 aufweist. In der Vertiefung 27 kann ein Kraftspeicher, also eine Feder ähnlich der dargestellten Zugfeder 16 bevorzugt werkzeuglos eingehängt werden.

Das Fixierelement 20 wird mit seinem Kopfsteg 22, mit dem bevorzugt verrundet ausgeführten Eingreifabschnitt 25 beispielhaft zwischen zwei Windungen der Zugfeder 16 fixiert, wobei das Fixierelement 20 mit seinem Kopfsteg 22 wie erkennbar mit dem verrundet ausgeführten Eingreifabschnitt 25 bezogen auf eine axiale Erstreckung X in der in der Mitte der Zugfeder 16 zwischen zwei Windungen fixiert ist.

Wie in Figur 3 weiter erkennbar, weist das Fixierelement 20 an seinem Hauptsteg 23 zwei Einlegenuten 28 auf. Die jeweilige Einlegenut 28 ist an einer Unterseite 29 des Fixierelementes 20 angeordnet, an welcher auch die hakenartige Vertiefung 27 des Kopfsteges 22 angeordnet ist. Die jeweilige Einlegenut 28 ist bevorzugt so ausgeführt, dass ein entsprechender Eingreifsteg des Tragkörpers 4 klemmend in die jeweilige Einlegenut 28 eingreifen kann.

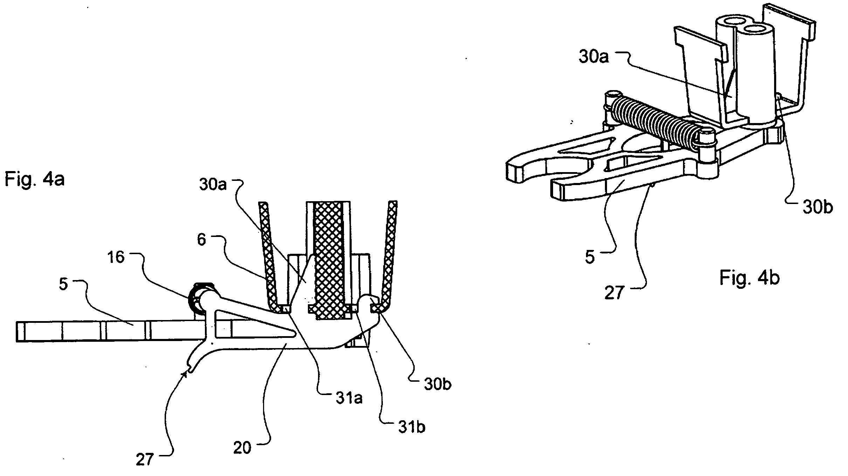

Die Figuren 4a und 4b zeigten eine alternative, verbesserte Ausführungsform. Hierbei weist das Fixierelement 20 zwei krallenartige Rastabschnitte 30a bzw. 30b auf. Diese können durch eine bzw. zwei schlitzartige Aussparungen 31a und 31b des Tragkörpers 4 geführt werden und quer zur Einleitrichtung derart verschoben werden, dass die krallenartige Aussparung der Rastabschnitte 30a und 30b in Eingriff kommen.

Ganz allgemein ist es für die vorgenannten Ausführungsformen vorteilhaft, wenn die Fixierelemente 20 als aus einem Blech, bevorzugt aus einem Edelstahlfederblech gebildet ist. Hierdurch wird zum einen die Rückstellung und Zentrierung nach einer Auslenkung in Umfangsrichtung verbessert. Weiterhin verhindert ein sehr elastisches Fixierelement 20, dass bei einer starken Auslenkung in Umfangsrichtung, die Spiralfeder 16 auf ihrer Halterung geschoben wird und abfällt.

### Bezugszeichenliste

- 1: Vorrichtung zum Greifen und Halten
- 2: Behälterbehandlungsanlage
- 3: Transportelement
- 4: Tragkörper
- 5: Greifarme
- 6: Rastelemente/Federstege
- 7: Gegenrastelemente
- 8: Kopfteil
- 9: Überstände
- 10: Hochsteg
- 11: Welle
- 12: Hutelement
- 13: Schraube
- 14: Hohlgewölbte freie Kante
- 15: Drehaufnahme
- 16: Zugfeder
- 17: Befestigungselemente
- 18: Ringnut
- 19: Endring/Federöse
- 20: Fixierelement
- 21: Fixierende
- 22: Kopfsteg
- 23: Hauptsteg
- 24: Ende
- 25: Eingreifabschnitt
- 26: Aufnahmeabschnitt
- 27: Vertiefung
- 28: Einlegenut(en)
- 29: Unterseite
- 30: 30a, 30b Rastabschnitte
- 31: 31 a, 31 b Aussparungen

## Patentansprüche

1. Vorrichtung zum Greifen und Halten von Behältern, in Behälterbehandlungsanlagen (2), mit einem an einem Transportelement (3) befestigbaren Tragkörper (4), welcher schwenkbare, federbelastete Greifarme (5) aufweist, wobei an den Greifarmen (5) Befestigungselemente (17) für eine in Schließrichtung wirkende Zugfeder (16) angeordnet sind, **gekennzeichnet durch**
ein Fixierelement (20), welches einerseits mit seinem freien Fixierende (21) in die Zugfeder (16) außerhalb ihrer Endringe oder Federösen (19) eingreift und andererseits, mit einem radial innen liegenden Ende, an dem Tragkörper (4) angeordnet ist.

2. Vorrichtung nach Anspruch 1, **dadurch gekennzeichnet, dass** das Fixierelement (20) eine T-förmige Ausgestaltung mit einem Kopfsteg (22) und einem senkrecht dazu angeordneten Hauptsteg (23) aufweist.

3. Vorrichtung nach Anspruch 2, **dadurch gekennzeichnet, dass** das Fixierelement (20) an seinem Kopfsteg (22) einen Eingreifabschnitt (25) aufweist, welcher verrundet ausgeführt ist.

4. Vorrichtung nach einem der Ansprüche 2 oder 3, **dadurch gekennzeichnet, dass** das Fixierelement (20) an seinem Kopfsteg (22) einen Aufnahmeabschnitt (26) aufweist, an welchem eine hakenartige Vertiefung (27) angeordnet ist.

5. Vorrichtung nach einem der Ansprüche 2 bis 3, **dadurch gekennzeichnet, dass** das Fixierelement (20) mit seinem Kopfsteg (22) zwischen zwei Windungen der Zugfeder (16) angeordnet ist.

6. Vorrichtung nach einem der Ansprüche 2 bis 5, **dadurch gekennzeichnet, dass** das Fixierelement (20) mit seinem Kopfsteg (22) zwischen zwei Windungen in der Mitte der Zugfeder (16) angeordnet ist.

7. Vorrichtung nach einem der Ansprüche 2 bis 6, **dadurch gekennzeichnet, dass** das Fixierelement (20) an seinem Hauptsteg (23) zumindest eine Einlegenut (28) aufweist.

8. Vorrichtung nach einem der Ansprüche 2 bis 7, **dadurch gekennzeichnet, dass** das Fixierelement (20) an seiner Unterseite (29) eine hakenartige Vertiefung (27) und/oder zumindest eine Einlegenut (28) aufweist, wobei die hakenartige Vertiefung (27) an dem Kopfsteg (22) und die zumindest eine Einlegenut (28) an dem Hauptsteg (23) des Fixierelementes (20) angeordnet sind.

9. Vorrichtung nach einem der vorhergehenden Ansprüche, **dadurch gekennzeichnet, dass** das Fixierelement (20) aus einem Blech gebildet ist.

10. Vorrichtung nach Anspruch 9, **dadurch gekennzeichnet, dass** das Fixierelement (20) aus einem Edelstahlfederblech gebildet ist.

11. Vorrichtung nach einem der vorhergehenden Ansprüche 1 bis 8, **dadurch gekennzeichnet, dass** das Fixierelement (20) aus einem Kunststoff gebildet ist.

## Claims

1. Device for gripping and holding containers in container treatment plants (2), comprising a support body (4) which can be fixed to a transport element (4), which comprises pivotable, spring-loaded gripper arms (5), wherein securing elements (17) are arranged on the gripper arms (5) for a traction spring (16) acting in the closing direction, **characterised in that the device comprises**
a fixing element (20), which engages on the one hand with its free fixing end (21) into the traction spring (16) outside its penetration elements or spring eyes (19) and, on the other, is also arranged on the support body (4) with an end lying radially inwards.

2. Device according to claim 1, **characterised in that** the fixing element (20) comprises a T-shaped configuration with a head web (22) and a main web (23) arranged perpendicular thereto.

3. Device according to claim 2, **characterised in that** the fixing element (20) comprises at its head web (22) an engagement section (25), which is configured as rounded.

4. Device according to any one of claims 2 or 3, **characterised in that** the fixing element (20) comprises at its head web (22) an accommodation section (26), arranged at which is a hook-shaped indentation (27).

5. Device according to any one of claims 2 to 3, **characterised in that** the fixing element (20) is arranged with its head web (22) arranged between two windings of the traction spring (16).

6. Device according to any one of claims 2 to 5, **characterised in that** the fixing element (20) is arranged with its head web (22) between two windings in the middle of the traction spring (16).

7. Device according to any one of claims 2 to 6, **characterised in that** the fixing element (20) comprises at its main web (23) at least one engagement groove (28).

8. Device according to any one of claims 2 to 7, **characterised in that** the fixing element (20) comprises on its underside (29) a hook-shaped indentation (27) and/or at least one insertion groove (28), wherein the hook-shaped indentation (27) is arranged at the head web (22) and the at least one insertion groove (28) is arranged at the main web (23) of the fixing element (20).

9. Device according to any one of the preceding claims, **characterised in that** the fixing element (20) is formed from a sheet or plate.

10. Device according to claim 9, **characterised in that** the fixing element (20) is formed from a special steel spring sheet or plate material.

11. Device according to any one of the preceding claims 1 to 8, **characterised in that** the fixing element (20) is formed from a plastic.

## Revendications

1. Dispositif servant à saisir et à maintenir des contenants, dans des installations de manutention de contenants (2), comprenant un corps de support (4) pouvant être fixé au niveau d'un élément de transport (3), qui présente des bras de préhension (5) sous la contrainte de ressorts, pouvant pivoter, dans lequel des éléments de fixation (17) pour un ressort de traction (16) agissant dans la direction de fermeture sont disposés au niveau des bras de préhension (5), **caractérisé par** un élément de fixation (20), qui vient en prise d'une part, par son extrémité de fixation (21) libre, avec le ressort de traction (16) en dehors de ses bagues d'extrémité ou oeillets de ressort (19) et qui est disposé d'autre part, par une extrémité située à l'intérieur radialement, au niveau du corps de support (4).

2. Dispositif selon la revendication 1, **caractérisé en ce que** l'élément de fixation (20) présente une configuration en forme de T avec une entretoise de tête (22) et une entretoise principale (23) disposée de manière perpendiculaire par rapport à cette dernière.

3. Dispositif selon la revendication 2, **caractérisé en ce que** l'élément de fixation (20) présente, au niveau de son entretoise de tête (22), une section de prise (25), qui est réalisée de manière arrondie.

4. Dispositif selon l'une quelconque des revendications 2 ou 3, **caractérisé en ce que** l'élément de fixation (20) présente, au niveau de son entretoise de tête (22), une section de réception (26), au niveau de laquelle un renfoncement (27) de type crochet est disposé.

5. Dispositif selon l'une quelconque des revendications 2 à 3, **caractérisé en ce que** l'élément de fixation (20) est disposé par son entretoise de tête (22) entre deux spires du ressort de traction (16).

6. Dispositif selon l'une quelconque des revendications 2 à 5, **caractérisé en ce que** l'élément de fixation (20) est disposé, par son entretoise de tête (22), entre deux spires au centre du ressort de traction (16).

7. Dispositif selon l'une quelconque des revendications 2 à 6, **caractérisé en ce que** l'élément de fixation (20) présente, au niveau de son entretoise principale (23), au moins une rainure d'insertion (28).

8. Dispositif selon l'une quelconque des revendications 2 à 7, **caractérisé en ce que** l'élément de fixation (20) présente, au niveau de son côté inférieur (29), un renfoncement (27) de type crochet et/ou au moins une rainure d'insertion (28), dans lequel le renfoncement (27) de type crochet est disposé au niveau de l'entretoise de tête (22) et que l'au moins une rainure d'insertion (28) est disposée au niveau de l'entretoise principale (23) de l'élément de fixation (20).

9. Dispositif selon l'une quelconque des revendications précédentes, **caractérisé en ce que** l'élément de fixation (20) est formé à partir d'une tôle.

10. Dispositif selon la revendication 9, **caractérisé en ce que** l'élément de fixation (20) est formé à partir d'une tôle élastique à ressorts en acier inoxydable.

11. Dispositif selon l'une quelconque des revendications précédentes 1 à 8, **caractérisé en ce que** l'élément de fixation (20) est formé à partir d'une matière plastique.
